# EUROPÄISCHE PATENTANMELDUNG

(11) **EP 0 895 849 A1**
(43) Veröffentlichungstag der Anmeldung: **10.02.1999**
(21) Anmeldenummer: 98113542.9
(22) Anmeldetag: 21.07.1998
(51) Int. Cl.: B29C 47/92, B29C 47/00, G01B 7/06

(54) **Vorrichtung zur Stegdickenmessung an Stegmehrfachplatten**

(30) Priorität: 26.07.1997 DE 19732281
(71) Anmelder: Röhm GmbH, 64293 Darmstadt (DE)
(72) Erfinder: Meier-Kaiser, Michael, Dr., D-64665 Alsbach-Hähnlein (DE); Grob, Horst, Dr., D-64289 Darmstadt (DE)

(57) **Zusammenfassung**

Die Erfindung betrifft eine Vorrichtung zur Messung der mittleren Stegdicken während der Extrusion von Stegmehrfachplatten auf einer Stegplattenextrusionsanlage bestehend aus Extruder (1), einer Stegplattenextrusionsdüse (2) und einer Kalibriereinrichtung (3), dadurch gekennzeichnet, daß mindestens ein kapazitiver Meßsensor (4) vorhanden ist, der hinter der Kalibriereinrichtung (3) traversierbar auf einer Lineareinheiten (5) angebracht ist, so daß damit über die Breite der extrudierten Kunststoffbahn (6) Meßdaten erfaßt und abgegeben werden können, die zur Bestimmung der mittleren Stegdicke der Stegmehrfachplatte verwendet werden können.

## Beschreibung

Die Erfindung betrifft eine Vorrichtung zur Messung der mittleren Stegdicken von Stegmehrfachplatten während der Extrusion.

### Stand der Technik

Stegmehrfachplatten finden eine breite Anwendung z. B. als transparente Bedachungen für Vordächer oder Carports oder für Wintergärten.

Stegmehrfachplatten werden in allgemeinen durch Extrusion eines thermoplastischen Kunststoffs, z. B. Polymethylmethacrylat oder Polycarbonat, durch eine Extrusionsdüse mit anschließender Kalibrierung hergestellt. Um steigenden Qualitätsanforderungen zu genügen und den Ausschuß gering zu halten, sind die Hersteller ständig bemüht, möglichst hohe Maßgenauigkeiten bei den Gurt- und Stegdicken der hergestellten Platten zu realisieren und diese ständig weiter zu verbessern.

Während die Messung der Gurtdicken durch Ultraschall nach der Kalibrierung "In-line" bewerkstelligt werden kann (siehe DE-U 92 06 011.0 und DE-U 92 11 092.4), ist für die Messung der Stegdicken bisher keine befriedigende Lösung gefunden worden. Die Messung erfolgt "Off-line" an aus der Produktion herausgenommen Stücken. Bei der Feststellung von Abweichungen von den Sollwerten, kann daher eine Korrektur an der Extrusionseinrichtung nur mit relativ großer Zeitverzögerung erfolgen.

Meßverfahren bei denen die Dicke extrudierter Kunststoffbahnen, insbesondere von Folien mittels kapazitiver Meßsensoren erfaßt wird sind bekannt z. B. aus *Spang A. und Wüsternberg (1993): "On-line-Dickenmessung: Berührungslose Verfahren für folienatige Materialien" in Kunstoffe 83, 11, S. 894 - 897.* Die Literaturstelle beschreibt unter anderem den Aufbau eines Folienprüfstands, bei dem verschiedene Meßsensoren auf Traversen mit Präzisions-Linear-Verfahreinheiten angebracht werden können. Für die Foliendickenmessung sind u. a. kapazitive Meßsensoren geeignet. Dabei kann der Meßsensor nach dem Prinzip des Schutzringkondensators aufgebaut sein.

Kapazitiv-induktive Kombisensoren sind im Handel erhältlich.
Haupteinsatzgebiet ist die Dickenmessung von Kunststoff-Folien wobei der induktive Meßsensor, auch als Wirbelstromsensor bezeichnet, den Abstand gegen eine hinter der Kunststoff-Folie positionierte Metallplatte oder -rolle mißt. Der induktive Sensorteil kann dabei mechanische Veränderungen erfassen, die z. B. durch thermische Ausdehnungen oder Durchbiegungen einer Traverse hervorgerufen werden. Der kapazitive Sensorteil erfaßt über den Einfluß des Dielektrikums die Dicke der Folie. Die Signale beider Meßprinziepien können arithmetrisch verknüpft werden. Dadurch ist der gemessene Foliendickenwert unabhängig von eventuellen Abstandsänderungen.

### Aufgabe und Lösung

Insbesondere zu geringe Stegdicken bei Stegmehrfachplatten können zu Ausschuß führen, da die garantierten statischen Eigenschaften der Platten beeinträchtigt sein können und diese daher nicht mehr zum Verkauf geeignet sind.

Es wurde als Aufgabe gesehen, eine Vorrichtung und ein Verfahren zur "In-line" Messung, d. h. eine Messung der mittleren Stegdicken von Stegmehrfachplatten während der Extrusion bereitzustellen.

Die Aufgabe wurde gelöst durch eine Vorrichtung zur Messung der mittleren Stegdicken während der Extrusion von Stegmehrfachplatten auf einer Stegplattenextrusionsanlage bestehend aus Extruder (1), einer Stegplattenextrusionsdüse (2) und einer Kalibriereinrichtung (3),
dadurch gekennzeichnet, daß
mindestens ein kapazitiver Meßsensor (4) vorhanden ist, der hinter der Kalibriereinrichtung (3) traversierbar auf einer Lineareinheiten (5) angebracht ist, so daß damit über die Breite der extrudierten Kunststoffbahn (6) Meßdaten erfaßt und abgegeben werden können, die zur Bestimmung der mittleren Stegdicke der Stegmehrfachplatte verwendet werden können.

Dabei war es überraschend, daß zur Lösung der Aufgabe ein kapazitives Meßsystem verwendet werden konnte, zumal diese Systeme bisher nur für Folien, also für Kunststoffkörper geringer Dicke verwendet wurden. Handelsübliche Stegmehrfachplatten hingegen weisen in der Regel eine viel höhere Dicke im Bereich von 4,5 bis 40 mm auf, wobei zu berücksichtigen ist, daß es sich um Hohlkörper handelt bei denen die zumessenden Objekte, die Stege (mit mittleren Stegdicken in Bereich von 0,1 bis 2 mm) unter den Gurten quasi verborgen liegen. Besondere Vorteile ergeben sich unter Verwendung eines kapazitiven-induktiven Meßsystems und in der Kombination der kapazitiven Messung mit einer Ultraschall-Gurtdickenmessung. Die erfindungsgemäße Vorrichtung eignet sich insbesondere für Stegdoppelplatten.

Die Erfindung wird durch die nachstehenden Figuren erläutert, ist aber nicht auf die dargestellten Ausführungsformen beschränkt.

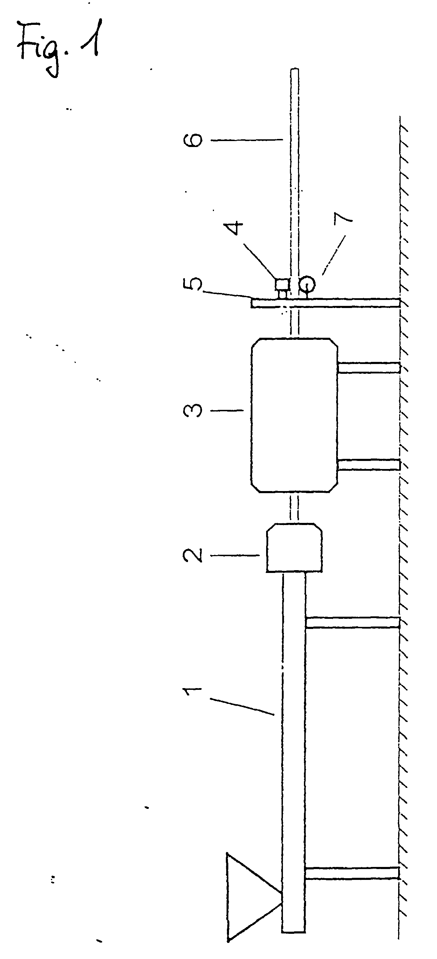

Fig. 1: Erfindungsgemäße Vorrichtung bestehend aus Extrusionsanlage mit Extruder (1), Stegplattenextrusionsdüse (2) und Kalibriereinrichtung (3), kapazitivem Meßsensor (4) mit rechteckigen Kondensatorflächen, der auf einer Lineareinheit (5) quer zur Extrusionsrichtung (Pfeil) angebracht sind. (6) = Extrudierte Kunststoffbahn; (7) = Metallrolle (für die induktive Messung wenn ein kapazitiv-induktiver Meßsensor (4) verwendet wird).
Ausführung der Erfindung

Unter einem kapazitiven Meßsensor (4) wird ein Meßsensor, der nach dem Prinzip eines Kondensators aufgebaut ist verstanden. Es wird ein kapazitiver Meßsensor, bevorzugt ein kapazitiv-induktiver Meßsensor, verwendet. Beim kapazitiv-induktiven befindet sich hinter der zu messenden Stegmehrfachplatte ein elektrischer Leiter, z. B. eine Metallrolle (7).

Kapazitive und auch kapazitiv-induktive Meßaufnehmereinheiten bzw. Meßsensoren sind dem Fachmann hinlänglich bekannt (siehe z. B .: *Spang A. und Wüsternberg (1993): "On-line-Dickenmessung:*
*Berührungslose Verfahren für folienartige Materialien" in Kunstoffe 83, 11, S. 894 - 897)*. Sie bestehen im wesentlichen aus einem Meßsensor, der nach dem Prinzip eines Kondensators aufgebaut ist. Mit Hilfe des Meßsensors kann die relative Dielektrizitätskonstante eines in unmittelbarer Nähe befindlichen Materials erfaßt werden. Die gemessene relative Dielektrizitätskonstante kann bei bekannter Massenkonstante des Materials in die tatsächliche Masse umgerechnet werden.

In die Messung geht der Quotient aus der Kondensatorfläche dividiert durch den Abstand der Kondensatorplatten mit ein. Während die Kondensatorfläche als konstant angesehen werden kann, ist der Abstand zum Material während der Messung Schwankungen
ausgesetzt, die durch mechanische Ungleichmäßigkeiten oder Temperaturschwankungen hervorgerufen werden können. Damit diese Schwankungen die Messung der relative Dielektrizitätskonstante nicht verfälschen, verarbeitet ein kapazitiv-induktiver Meßaufnehmer gleichzeitig ein induktives Signal, das zur Korrektur der Abstandsschwankungen verwendet wird. Hierzu ist es notwendig, daß sich hinter dem zu messenden Kunststoffmaterial ein elektrisch leitendes Material, z. B. eine Metallrolle befindet.

Mittels eines kapazitiv-induktiven Meßaufnehmers bzw. Meßsensors kann daher die sich vor der Kondensatorfläche befindliche Masse relativ oder absolut mit guter Genauigkeit erfaßt werden. Kapazitiv-induktive Meßaufnehmer werden daher zum Beispiel zur Messung der Dicke extrudierter Folienbahnen verwendet.

Die dem Kunststoff zugewandte Kondensatorfläche ist bevorzugt rechteckig ausgeführt Dabei wird die längere Seite parallel zur Extrusionsrichtung ausgerichtet. Je geringer die Breite ist, desto sensitiver wird die extrudierte Kunststoffbahn (6) über die Breite erfaßt. Die Länge soll zugleich relativ groß sein, um trotz geringer Breite zu einem ausreichenden starken Meßsignal zu kommen. Bei zu großer Länge steigt allerdings wiederum die Fehlermöglichkeit durch Schwankungen in der Längsausrichtung. Eine geeignete Kondensatorfläche kann z. B. 2 - 10 mm in der Breite und 10 - 50 mm in der Länge betragen.

Der kapazitive Meßsensor (4) wird auf auf einer traversierenden Lineareinheiten (5) bevorzugt im rechten Winkel quer zur Extrusionsrichtung in geringem Anstand parallel zur extrudierten Bahn, z. B. 0,2 - 10 mm, bevorzugt 0,5 - 2 mm, angebracht. Bevorzugt werden Traversen mit Präzisions-Linear-Verfahreinheiten verwendet, die z. B. mit einem Spindelantrieb oder mit Schrittmotoren ausgestattet sein können.

Die traversierende Lineareinheit kann günstigerweise z. B. in einem Abstand von 10 - 200 cm hinter der Stegplattenkalibrierungseinheit jeweils über oder auch unter der extrudierten Bahn angebracht sein.

Hochgenaue Lineareinheiten ermöglichen eine Laufgenauigkeit mit einer Abweichung von höchstens 50 µm auf z. B. 2 m Fahrstrecke. Die Geschwindigkeit kann z. B. 0,5 bis 2 m/min betragen.

Die im Extruder (1) geschmolzene Kunststoffschmelze tritt kontinuierlich aus der Stegplattenextrusionsdüse (2) in Form der extrudierten Kunststoffbahn (6) in Stegplattenform im thermoplastischen Zustand aus und wird in der Kalibriereinrichtung (3) unter die Erweichungstemperatur abgekühlt. Die Geschwindigkeit der extrudierten Kunststoffbahn liegt dabei üblicherweise im Bereich von z. B. 0,2 - 2 m/min.

Der auf der Lineareinheit (5) über und unter der Bahn angebrachte kapazitive Meßsensor (4) wird nun bevorzugt mit konstanter Geschindigkeit von z. B. 0,5 - 2 m/min über die Breite der Bahn gefahren, wobei Meßsignale aufgenommen und abgegeben werden. Die Datenverarbeitung und Steuerung der erfindungsgemäßen Vorrichtung wird von entsprechenden elektronischen Peripheriegeräten, z. B. einer Rechnereinheit, bewerkstelligt. Dies ist dem Fachmann geläufig. Im Bereich der Stege wird die relative Dielektrizitätskonstante der Stege und Gurte erfaßt. zwischen den Stegen nur die der Gurte. Aus der Differenz der Summe der Gurte und Stege minus dem Sollwert für die Gurte ergibt sich recht genau die relative oder absolute Masse der Stege.

Besonders bevorzugt wird die kapazitive Messung der mittleren Stegdicken mit einer an sich bekannten Ultraschallmessung zur Messung der Gurtdicken kombiniert (siehe z. B. : DE-U 92 06 011.0 und DE-U 92 11 092.4). Die erfindungsgemäß gemessene relative oder absolute Masse im Bereich der Stege kann dann um den durch Ultraschall gemessenen Beitrag der Gurte korrigiert werden. Dies führt dazu, daß die Stegdicken noch genauer erfaßt werden können. Bevorzugt wird der kapazitive Meßsensor (4) dann zusätzlich auf der Traverse für den Ultraschallprüfkopf, z. B. direkt neben oder am Ultraschallprüfkopf, angebracht.

Die abgegebenen Meßsignale können z. B. optisch auf einem Computerbildschirm oder im Form eines Ausdrucks sichtbar gemacht werden. Bevorzugt werden die abgegebenen Meßdaten zur Regelung der

Extrusionsanlage verwendet werden, wodurch die mittleren Stegdicken innerhalb vorgegebener Toleranzen gehalten werden können.
Bei einer Abweichung von vorgegebenen Sollwerten kann die Extrusionsanlage z. B. durch Korrektur des Massestroms des Extruders oder der Stellglieder in der Extrusionsdüse, die z. B. auf den Staubalken oder die Flexlippenstellung einwirken (siehe dazu z. B. EP-A 367 022, EP-A 435 078, EP-A 418 681 und EP-A 484 841), manuell oder auch automatisch wieder in den vorgegeben Bereich geregelt werden. Eine automatische Regelung von Extrusionsdüsen in Abhängigkeit von gemessen Schichtdickenwerten der extrudierten Kunststoffbahnen ist z. B. in EP-A 418 681 beschrieben.

Die erfindungsgemäße Vorrichtung eignet sich für Stegmehrfachplatten aus praktisch beliebigen Kunststoffen wie z. B. Polystyrol, Polycarbonat oder Polymethylmethacrylat. Die Messung der mittleren Stegdicken und gegebenenfalls die nachfolgende Regelung ist jedoch bei Stegdoppelplatten wesentlich genauer als bei Stegdreifach- oder vierfachplatten, so daß die Bestimmung der mittleren Stegdicke bei Stegdoppelplatten besonders vorteilhaft ist. Mittels der erfindungsgemäßen Vorrichtung lassen sich daher Stegmehrfachplatten und insbesondere Stegdoppelplatten mit hoher Gleichförmigkeit der mittleren Stegdicken herstellen. Ein wesentlicher Vorteil der erfindungsgemäßen Vorrichtung liegt in der unmittelbaren Kontroll- und Korrekturmöglichkeit wahrend der Extrusion, die es gestattet Ausschuß zu vermeiden bzw. zu minimieren.

## Patentansprüche

1. Vorrichtung zur Messung der mittleren Stegdicken während der Extrusion von Stegmehrfachplatten auf einer Stegplattenextrusionsanlage bestehend aus Extruder (1), einer Stegplattenextrusionsdüse (2) und einer Kalibriereinrichtung (3),
dadurch gekennzeichnet, daß
mindestens ein kapazitiver Meßsensor (4) vorhanden ist, der hinter der Kalibriereinrichtung (3) traversierbar auf einer Lineareinheiten (5) angebracht ist, so daß damit über die Breite der extrudierten Kunststoffbahn (6) Meßdaten erfaßt und abgegeben werden können, die zur Bestimmung der mittleren Stegdicke der Stegmehrfachplatte verwendet werden können.

2. Vorichtung nach Anspruch 1, dadurch gekennzeichnet, daß als kapazitiver Meßsensor (4) ein kapazitiv-induktiver Meßsensor verwendet wird und sich hinter der zu messenden Stegmehrfachplatte ein elektrischer Leiter (7) befindet.

3. Vorrichtung nach Anspruch 1 oder 2, dadurch gekennzeichnet, daß die Kondensatorfläche des kapazitiven Meßsensors (4) rechteckig ist und längs zur Extrusionsrichtung ausgerichtet ist.

4. Vorrichtung nach einem oder mehreren der Ansprüche 1 bis 3, dadurch gekennzeichnet, daß die kapazitive Messung der mittleren Stegdicken mit einer an sich bekannten Ultraschallmessung zur Messung der Gurtdicken kombiniert wird.

5. Vorrichtung nach einem oder mehreren der Ansprüche 1 bis 4, dadurch gekennzeichnet, daß die abgegebenen Meßdaten zur Regelung der Extrusionsanlage verwendet werden, wodurch die mittleren Stegdicken innerhalb vorgegebener Toleranzen gehalten werden.

6. Vorrichtung nach einem oder mehreren der Ansprüche 1 bis 5, dadurch gekennzeichnet, daß auf der Stegplattenextrusionsanlage Stegdoppelplatten extrudiert werden.
